# EUROPÄISCHE PATENTSCHRIFT

(11) **EP 0 391 100 B1**
(45) Veröffentlichungstag und Bekanntmachung des Hinweises auf die Patenterteilung: **09.06.1993**
(21) Anmeldenummer: 90104873.6
(22) Anmeldetag: 15.03.1990
(51) Int. Cl.: H02G 5/08

(54) **Abgangskasten für ein Stromschienensystem**
Outlet casing for a power rail system
Coffret de sortie pour un système à rails conducteurs

(30) Priorität: 06.04.1989 DE 8904233 U
(43) Veröffentlichungstag der Anmeldung: 10.10.1990
(73) Patentinhaber: Klöckner-Moeller GmbH, 53115 Bonn (DE)
(72) Erfinder: Pollauf, Sigrid, Dipl.-Ing., D-5042 Erfstadt (DE)

(56) Entgegenhaltungen:
- US-A- 2 970 245
- PATENT ABSTRACTS OF JAPAN vol. 7, no. 239 (E-206)(1384) 25 Oktober 1983, & JP-A-58 130512 (HITACHI SEISAKUSHO KK) 04 August 1983,
- PATENT ABSTRACTS OF JAPAN vol. 13, no. 139 (E-738) 06 April 1989, & JP-A-63 302588 (FUJITSU LTD) 09 Dezember 1988,

## Beschreibung

Die Erfindung betrifft einen Abgangskasten für ein Stromschienensystem mit, aus einem Gehäuse herausgeführten, Verbindungsstücken.

Ein Abgangskasten dieser Art ist aus der EP 168 310 und der US-A-2970245 bekannt. Bei derartigen Abgangskästen sind Verbindungsstücke herausgeführt, die in ein Stromschienensystem greifen und die elektrische Verbindung zwischen den Stromschienen und den in dem Abgangskasten angeordneten elektrischen Geräten herstellen. Hierbei müssen die Bereiche der Verbindungsstücke, die mit den Stromschienen kontaktieren, elektrisch leitend sein. Hierdurch kann während der Montage des Abgangskastens eine Gefährdung des Bedienungspersonals auftreten.
Der Erfindung liegt die Aufgabe zugrunde, einen Abgangskasten der obengenannten Art derart zu verbessern, daß die Gefahr für den Bedienenden während der Montage so gering wie möglich gehalten wird und die Verbindungsstücke weitgehend abgedeckt sind.
Diese Aufgabe wird erfindungsgemäß dadurch gelöst, daß um die Verbindungsstücke eine in Montagerichtung des Schienenabgangskastens längenveränderbare, vorzugsweise schlauchartige, Abdeckvorrichtung derart am Abgangskasten angeordnet ist, daß die Verbindungsstücke vollständig abgedeckt und lediglich in axialer Richtung (Montagerichtung) auf der dem Abgangskasten abgewandten Seite zugänglich sind. Die schlauchartige Abdeckvorrichtung wird vorteilhafterweise in Form eines Faltenbalges gestaltet, dessen vom Abgangskasten abgewandtes Ende mittels eines Rahmens verstärkt ist. Durch einen Bügel der unter der Wirkung einer Feder steht, wird die Abdeckvorrichtung in ihrer entfalteten Lage gehalten. Sie legt sich bei der Montage des Schienenabgangskasten an ein Schienensystem zuerst an das Schienensysstem an und verkürzt sich entsprechend der Bewegung der Verbindungsstücke in das Schienensystem.
Die Erfindung soll nun an Hand eines in der Zeichnung dargestellten Ausführungsbeispiels näher erläutert werden.

Es zeigen:
Fig. 1 den Abgangskasten außerhalb des Schienensystems;
Fig. 2 den Abgangskasten mit in das Schienensystem eingeführten Verbindungsstücken;
Fig. 3 eine Darstellung in Richtung X der Fig. 1.

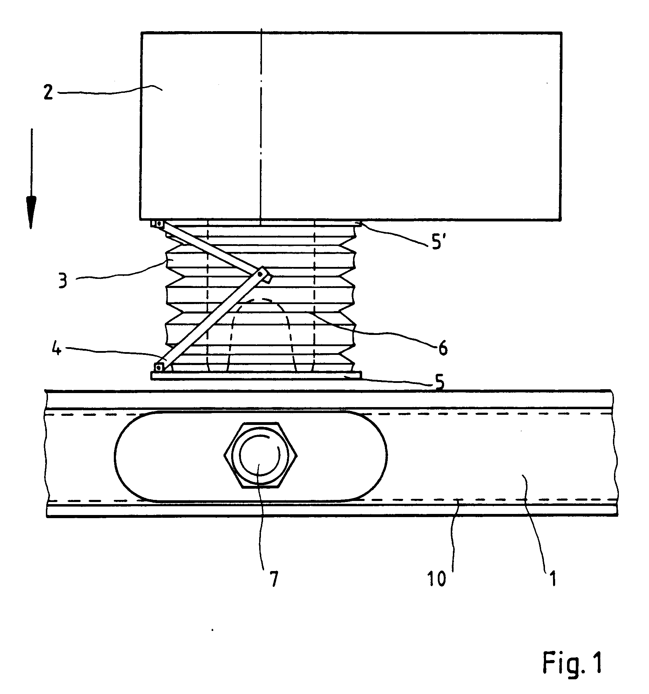

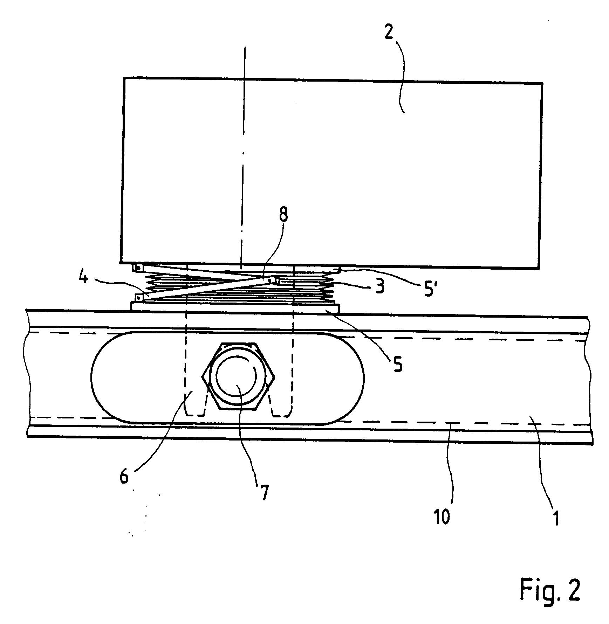

In Fig. 1 ist der Abgangskasten 2 und das Schienensystem 1 vor der Montage des Abgangskastens dargestellt. Hierbei ist zu erkennen, daß die gestrichelt dargestellten Verbindungsstücke 6 durch die Abdeckvorrichtung 3 an allen vier Seiten vollständig überdeckt sind. Die dem Abgangskasten 2 abgewandte Seite der Abdeckvorrichtung 3 wird durch den Rahmen 5 begrenzt. An dem Rahmen 5 ist ein Bügel 4 mit einem Gelenk befestigt, der die Verbindung zum Abgangskasten 2 herstellt. Die Abdeckvorrichtung 3 ist mittels eines weiteren Rahmens 5' am Schienenkasten selbst befestigt. Als günstige Gestaltungsform für die Abdeckvorrichtung bietet sich ein Faltenbalg an, der bei abgenommenen Abgangskasten 2 durch den Bügel 4 und eine vorzugsweise im Gelenk des Bügels 4 angeordnete Feder 8 in der entfalteten Stellung gehalten wird. Bei der Verbindung des Abgangskastens 2 mit einem Schienensystem 1 legt sich zuerst der Rahmen 5 an dem Schienensystem 1 an und deckt die Verbindungsstücke 6 nach außen vollkommen ab. Die Verbindungsstücke 6 schieben sich in das Schienensystem 1 zwischen die Stromschienen 10. Dabei greifen die in den Verbindungsstücken 6 angeordneten Aussparungen 11 über die Bolzenklemme 7 und die Verbindungsstücke werden mit den Stromschienen 10 verklemmt. Fig. 2 zeigt die Endstellung der Verbindung des Abgangskastens 2 mit dem Schienensystem 1. Hierbei ist zu erkennen, wie die Abdeckvorrichtung 3, hier als, Faltenbalg ausgeführt, sich auf ein Minimum verkürzt hat.

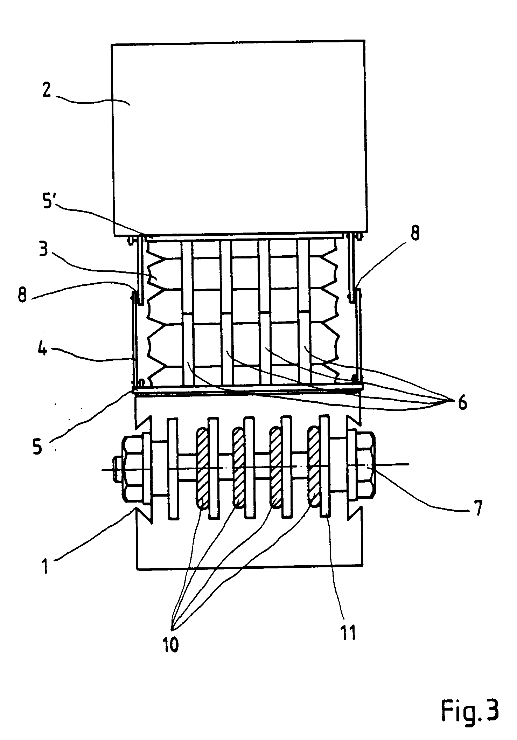

Damit ist eine Montage des Abgangskastens 2 mit dem Schienensystem 1 möglich, ohne daß stromführende Teile berührt werden können. Das gilt gleichermaßen auch für die Demontage des Abgangskastens 2 vom Schienensystem 1. Dabei wird der Faltenbalg über den Rahmen 5 und den am Bügel 4 mittels der in Fig. 3 dargestellten Feder 8 entsprechend dem Abziehvorgang in die entfaltete Stellung gebracht.

In Fig. 3 sind die Schienen 10 des Schienensystems 1 zu erkennen, die mit den Verbindungsstücken 6 im montierten Zustand kontaktieren .
In dieser Fig. ist die Abdeckvorrichtung 3 geschnitten dargestellt.
Zur vereinfachten Montage des Abgangskastens mit dem Schienensystem sind üblicherweise bekannte Führungselemente vorgesehen, die jedoch hier nicht dargestellt und erläutert sind.
Dieses Ausführungsbeispiel geht von einer Klemmverbindung mittels Einbolzenklemme aus. Denkbar sind auch andere bekannte Klemmverbindungen, die mittels einer längenveränderbaren Abdeckvorrichtung (3) gegen Berühren bei der Montage gesichert sind.

## Patentansprüche

1. Abgangskasten für ein Stromschienensystem (1) mit aus einem Gehäuse herausgeführten Verbindungsstücken (6), dadurch gekennzeichnet, daß um die Verbindungsstücke (6) eine in Montagerichtung des Schienenabgangskastens (2) längenveränderbare, vorzugsweise schlauchartige Abdeckvorrichtung (3) derart am Abgangskasten (2) angeordnet ist, daß die Verbindungsstücke (6) vollständig abgedeckt und lediglich in axialer Richtung (Montagerichtung) auf der dem Abgangskasten (2) abgewandten Seite zugänglich sind.

2. Abgangskasten nach Anspruch 1, dadurch gekennzeichnet, daß die Abdeckvorrichtung (3) in Form eines Faltenbalges gestaltet ist.

3. Abgangskasten nach den Ansprüchen 1 und 2, dadurch gekennzeichnet, daß die Abdeckvorrichtung (3) an ihrem geöffneten Ende einen festen Rahmen (5) aufweist.

4. Abgangskasten nach den Ansprüchen 1 bis 3, dadurch gekennzeichnet, daß die Abdeckvorrichtung (3) mittels eines unter der Wirkung einer Feder (8) stehenden Bügels (4) derart in dem entfalteten Zustand gehalten wird, daß sich bei der Montage des Abgangskastens (2) an ein Schienensystem (1) der Rahmen (5) zuerst an das Schienensystem (1) anlegt und sich die Abdeckvorrichtung (3) entsprechend der Bewegung der Verbindungsstücke (6) in das Schienensystem (1) verkürzt.

## Claims

1. Tap-off unit for a busbar trunking system (1) having connectors (6) leading out of an enclosure, characterized in that a shrouding facility (3), adjustable in length in the mounting direction of the busbar tap-off unit (2) and preferably of tubular construction, arranged around the connectors (6), is located on the tap-off unit (2) in such a manner that the connectors (6) are fully shrouded and are accessible only in the axial direction on the side facing away from the tap-off unit (2).

2. Tap-off unit as claim 1, characterized in that the shrouding facility (3) is designed in the form of bellows.

3. Tap-off unit as claims 1 and 2, characterized in that the shrouding facility (3) has a fixed frame (5) at its open end.

4. Tap-off units as claims 1 to 3, characterized in that the shrouding facility (3) is retained in the unfolded state by means of a bow (4) subject to the action of a spring (8) in such a manner that when the tap-off unit (2) is fitted to a busbar system (1), the frame (5) is first placed on the busbar system (1), and the shrouding facility (3) reduces in length according to the movement of the connectors (6) into the busbar system (1).

## Revendications

1. Coffret de sortie pour système à rail conducteur (1) avec pièces de jonction (6) sortant d'un bâti, caractérisé en ce qu'un dispositif de recouvrement (3), extensible dans le sens de montage du coffret de sortie (2) et de préférence vermiculaire, est disposé de manière à ce que les pièces de jonction (6) soient entièrement recouvertes et accessibles uniquement dans le sens axial (sens de montage) du côté opposé au coffret de sortie (2).

2. Coffret de sortie répondant à la revendication 1, caractérisé en ce que le dispositif de recouvrement (3) est disposé en forme de soufflet.

3. Coffret de sortie répondant aux revendications 1 et 2, caractérisé en ce que le dispositif de recouvrement (3) présente à son extrémité ouverte un cadre fixe (5).

4. Coffret de sortie répondant aux revendications 1 à 3, caractérisé en ce que le dispositif de recouvrement (3) est maintenu à l'état déplié au moyen d'un étrier (4) retenu en position verticale sous l'action d'un ressort (8) de telle sorte que lors du montage du coffret de sortie (2) sur un système à rails (1), le cadre (5) soit tout d'abord en contact avec le système à rails (1) et que le dispositif de recouvrement (3) se réduise en fonction du mouvement des pièces de jonction (6) dans le système à rails.
